# FASCICULE DE BREVET EUROPEEN

(11) **EP 3 006 156 B1**
(45) Date de publication et mention de la délivrance du brevet: **26.04.2017**
(21) Numéro de dépôt: 15188586.0
(22) Date de dépôt: 06.10.2015
(51) Int. Cl.: B23K 20/02, B23K 20/16, B23K 20/22, F28F 3/12, F28D 7/00, B23K 101/14

(54) **PROCEDE DE REALISATION D'UN MODULE D'ECHANGEUR DE CHALEUR A AU MOINS DEUX CIRCUITS DE CIRCULATION DE FLUIDE, ECHANGEUR DE CHALEUR ET REACTEUR-ECHANGEUR ASSOCIES**
HERSTELLUNGSVERFAHREN EINES WÄRMETAUSCHERMODULS MIT MINDESTENS ZWEI FLUID-UMWÄLZKREISLÄUFEN, ENTSPRECHENDE WÄRMETAUSCHER UND REAKTOR-WÄRMETAUSCHER
METHOD OF PRODUCING A HEAT EXCHANGER MODULE WITH AT LEAST TWO FLUID FLOW PATHS, ASSOCIATED HEAT EXCHANGER AND REACTOR-EXCHANGER

(30) Priorité: 10.10.2014 FR 1459747
(43) Date de publication de la demande: 13.04.2016
(73) Titulaire: COMMISSARIAT À L'ÉNERGIE ATOMIQUE ET AUX ÉNERGIES ALTERNATIVES, 75015 Paris (FR)
(72) Inventeur: CHOMETTE, Sébastien, 38160 Saint-Marcellin (FR); LEIBOLD, Jean-Marc, 38800 Pont de Claix (FR); MORO-LE GALL, Isabelle, 38600 Fontaine (FR); RIGAL, Emmanuel, 38360 Sassenage (FR); VIDOTTO, Fabien, 38600 Fontaine (FR)
(74) Mandataire: Nony

(56) Documents cités:
- FR-A1- 2 936 179
- FR-A1- 2 989 158
- JP-A- 2004 251 543
- US-B1- 6 467 535

## Description

### Domaine technique

La présente invention concerne les échangeurs de chaleur à au moins deux circuits de fluide comportant chacun des canaux, conformément au préambule de la revendication 14. L'invention a trait plus particulièrement à un procédé de fabrication de tels échangeurs par soudage par diffusion obtenu par la technique de compression isostatique à chaud (CIC), par brasage et par brasage diffusion, conformément au préambule de la revendication 1. Les échangeurs de chaleur connus comprennent soit un soit au moins deux circuits à canaux de circulation interne de fluide. Dans les échangeurs à un seul circuit, les échanges thermiques se réalisent entre le circuit et un fluide environnant dans lequel il baigne. Dans les échangeurs à au moins deux circuits de fluide, les échanges thermiques se réalisent entre les différents circuits de fluide.

Il est connu des réacteurs chimiques qui mettent en oeuvre un procédé en continu selon lequel on injecte simultanément une quantité faible de co-réactants, à l'entrée d'un premier circuit de fluide, de préférence équipé d'un mélangeur, et on récupère le produit chimique obtenu en sortie dudit premier circuit. Parmi ces réacteurs chimiques connus, certains comprennent un deuxième circuit de fluide, appelé usuellement utilité, et dont la fonction est de contrôler thermiquement la réaction chimique, soit en apportant la chaleur nécessaire à la réaction, soit au contraire en évacuant la chaleur dégagée par celle-ci. De tels réacteurs chimiques à deux circuits de fluide avec utilité sont usuellement appelés échangeurs-réacteurs.

La présente invention concerne aussi bien la réalisation d'échangeurs de chaleur à fonction uniquement d'échanges thermiques que la réalisation d'échangeurs-réacteurs. Aussi, par « échangeur de chaleur à au moins deux circuits de fluide », il faut comprendre dans le cadre de l'invention, aussi bien un échangeur de chaleur à fonction uniquement d'échanges thermiques qu'un échangeur-réacteur.

### Etat de la technique

Les échangeurs de chaleur, dits à plaques, existants présentent des avantages importants par rapports aux échangeurs de chaleur, dits à tubes, existants, en particulier leurs performances thermiques et leur compacité grâce à un rapport de la surface sur le volume d'échanges thermiques favorablement élevé.

Les échangeurs à tubes connus sont par exemple des échangeurs à tubes et calandre, dans lesquels un faisceau de tubes droits ou cintrés en forme de U ou en forme d'hélice est fixé sur des plaques percées et disposé à l'intérieur d'une enceinte dénommée calandre. Dans ces échangeurs à tubes et calandre, l'un des fluides circule à l'intérieur des tubes tandis que l'autre fluide circule à l'intérieur de la calandre. Ces échangeurs à tubes et calandre présentent un volume important et sont donc de faible compacité. Cependant, l'étanchéité entre le fluide contenu dans les tubes et celui circulant autour de ces derniers est garantie par l'intégrité des tubes.

Les échangeurs à plaques connus sont plus compacts et sont obtenus par empilement de plaques comportant des canaux et assemblées entre elles.

Les canaux sont réalisés par emboutissage de plaques, le cas échéant par ajout de feuillards pliés sous forme d'ailettes ou par usinage de rainures. L'usinage est réalisé par des moyens mécaniques, par exemple par fraisage ou par voie chimique. L'usinage chimique est usuellement appelé gravage chimique ou électrochimique.

L'assemblage des plaques entre elles a pour objectif d'assurer l'étanchéité et/ou la tenue mécanique des échangeurs, notamment la tenue à la pression des fluides circulant à l'intérieur.

Plusieurs techniques d'assemblage sont connues et sont mises en oeuvre en fonction du type d'échangeur à plaques souhaité. L'assemblage peut ainsi être obtenu par des moyens mécaniques, tels que des tirants maintenant l'empilement serré entre deux plaques épaisses et rigides disposées aux extrémités. L'étanchéité des canaux est alors obtenue par écrasement de joints rapportés. L'assemblage peut être également obtenu par soudage, généralement limité à la périphérie des plaques, ce qui nécessite parfois d'insérer, ultérieurement au soudage, l'échangeur dans une calandre pour permettre sa tenue à la pression des fluides. L'assemblage peut encore être obtenu par brasage, en particulier pour des échangeurs pour lesquels des ailettes sont ajoutées. L'assemblage peut enfin être obtenu par soudage par diffusion (soudage-diffusion).

Les deux dernières techniques citées permettent de réaliser des échangeurs particulièrement performants en termes de tenue mécanique. En effet, grâce à ces deux techniques, l'assemblage est obtenu non seulement à la périphérie des plaques mais aussi à l'intérieur de l'échangeur.

Les échangeurs de chaleur à plaques assemblés par soudage par diffusion présentent des joints encore plus performants mécaniquement que les joints des échangeurs obtenus par brasage du fait de l'absence du métal d'apport requis pour le brasage.

Le soudage-diffusion consiste à obtenir un assemblage à l'état solide en appliquant une force à chaud sur les pièces à assembler pendant un temps donné. La force appliquée a une fonction double: elle permet l'accostage, c'est-à-dire la mise en contact des surfaces à souder, et elle facilite l'élimination par fluage-diffusion de la porosité résiduelle dans les joints (interfaces).

La force peut être appliquée par compression uniaxiale, par exemple à l'aide d'une presse équipée d'un four ou simplement à l'aide de masses disposées au sommet de l'empilement des pièces à assembler. Ce procédé est communément appelé soudage-diffusion uniaxial et il est appliqué industriellement pour la fabrication d'échangeurs de chaleur à plaques.

Une limitation importante du procédé soudage-diffusion uniaxial tient au fait qu'il ne permet pas de souder des joints d'orientation quelconque par rapport à la direction d'application de la force de compression uniaxiale.

Un autre procédé alternatif pallie cet inconvénient. Dans cet autre procédé, la force est appliquée via un gaz sous pression dans une enceinte étanche. Ce procédé est communément appelé Compression Isostatique à Chaud (CIC). Un autre avantage du procédé de soudage-diffusion par CIC comparativement au procédé de soudage-diffusion uniaxial est qu'il est plus largement répandu à l'échelle industrielle. En effet, la CIC est aussi utilisée pour le traitement par lots de pièces de fonderie ainsi que pour la compaction de poudres.

Les échangeurs actuellement connus, à plaques ou à tubes, présentent des inconvénients majeurs que l'on peut énumérer comme suit.

Le principal inconvénient des échangeurs à tubes et calandre est leur faible compacité, comme décrit plus tôt. Afin de remédier à ce problème, il peut être envisagé de faire circuler les au moins deux fluides dans les réseaux de canaux indépendants, comme par exemple envisagé dans le brevet FR2989158. Cependant, pour des échangeurs à au moins deux circuits de fluide à co-courant ou à contre-courant, c'est-à-dire avec une zone d'échange avec des canaux parallèles, l'admission et le collectage des fluides se révèlent alors laborieux. En effet, il apparaît nécessaire d'orienter les tubes des au moins deux circuits suivant des directions différentes au niveau des zones d'admission ou de collectage afin d'éviter le mélange des fluides. Ceci nécessite donc d'utiliser des rayons de courbures différents pour tous les tubes d'un même circuit. De plus, les techniques de cintrage ne permettent pas de réaliser de faibles rayons de courbures

Un premier inconvénient majeur des échangeurs à plaques est le coût de fabrication des plaques, en particulier dans le cas de plaques à canaux usinés. Le gravage chimique permet certes une certaine réduction de coût par rapport à l'usinage mécanique mais qui est toute relative : en effet, rapporté à une longueur donnée, le coût d'un canal d'un échangeur à plaques réalisé par gravage chimique est supérieur à celui d'un échangeur à tubes. En outre, le gravage chimique présente de nombreux inconvénients, tels qu'une précision dimensionnelle insuffisante, un arrondissement des arêtes défavorable au soudage par diffusion ou une pollution résiduelle des surfaces à assembler par des résidus des produits de décapage et de masquage utilisés.

Un second inconvénient majeur des échangeurs à plaques réside dans l'importance d'obtenir une étanchéité optimale de chaque circuit de fluide par rapport aux autres circuits et à l'environnement de l'échangeur, principalement pour des raisons de sécurité. En conséquence, la fabrication d'un tel échangeur nécessite la plupart du temps un état de surface des plaques quasi exempt de tout défaut. Des défauts initialement présents en surface des plaques avant fabrication de l'échangeur peuvent subsister après fabrication et ainsi générer une fuite éventuelle de l'un des fluides. Avant fabrication, des contrôles de surface longs et fastidieux de chaque tôle sont alors nécessaires pour détecter ces défauts, et de nombreuses plaques peuvent être mises au rebut le cas échéant. De plus, le contrôle de l'étanchéité de l'échangeur de chaleur à au moins deux circuits de fluide après fabrication est difficile à mettre en oeuvre avec les techniques actuelles. L'ensemble de ces opérations de contrôle couplé à la mise au rebut de plaques présentant des défauts peuvent générer des surcoûts importants.

Un autre inconvénient important des échangeurs compacts à plaques soudées par diffusion est la difficulté à trouver un bon compromis entre la résistance mécanique des joints d'interface obtenus, la déformation acceptable des canaux et le grossissement de grain du matériau de structure.

En effet, dans le procédé de soudage-diffusion uniaxial, on peut appliquer une force de faible voire très faible valeur qui déforme peu les canaux, à la condition que les plaques soient bien en contact mutuel et que la faible valeur de la force soit compensée par une augmentation de la température de soudage pour l'élimination de la porosité aux interfaces. Ces conditions impliquent inévitablement un grossissement du grain du matériau qui peut devenir rédhibitoire vis-à-vis de sa résistance à la corrosion et de ses propriétés mécaniques. En outre, dans de nombreuses applications, il est critique que le nombre de grains de matériau situés entre deux circuits de fluide dépasse une valeur minimale pour éviter les risques de fuite.

Dans le procédé de soudage-diffusion par CIC, l'empilement des pièces est préalablement encapsulé dans un conteneur étanche pour éviter que le gaz ne pénètre dans les interfaces constituées par les surfaces à souder. La pression de gaz habituellement utilisée est élevée, de l'ordre de 500 à 2000 bar, typiquement 1000 bar. La pression minimale de fonctionnement des enceintes industrielles adaptées pour mettre en oeuvre la CIC est quant à elle comprise entre 40 et 100 bar. Or, les joints soudés à cette pression sont moins résistants que ceux obtenus à plus haute pression, par exemple à 1000 bar, toutes les autres conditions étant égales par ailleurs (matériau, température, état de surface...). De surcroît, ces faibles pressions entre 40 et 100 bar sont encore trop importantes pour des plaques à grande densité de canaux, c'est-à-dire des plaques dont la surface de contact déterminée avec une plaque adjacente est faible par rapport à la surface totale apparente. En effet, pour ce type de plaques, même une pression de quelques dizaines de bar peut suffire à engendrer une déformation inacceptable des canaux. Une solution possible peut consister à diminuer la température d'assemblage pour que le matériau résiste mieux à la pression, mais cela revient à dégrader encore la résistance des joints. Une autre solution possible peut consister à changer le dessin des canaux pour rendre l'empilement plus résistant à la pression par diminution des dimensions des canaux ou augmentation des dimensions des isthmes entre canaux, mais cela revient à rendre l'échangeur à plaques moins compact.

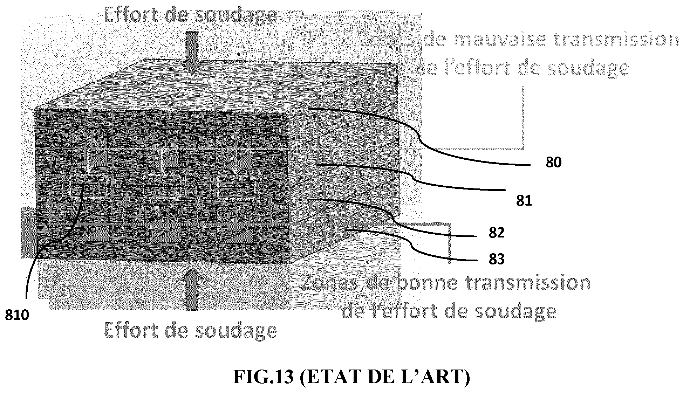

Il est à noter que la transmission de l'effort de soudage dans un empilement de plaques rainurées se fait de façon inégale, qu'il s'agisse du procédé de soudage diffusion uniaxial ou du procédé de soudage diffusion par CIC. En effet, les parties des interfaces situées sous les rainures sont soumises à un effort de soudage réduit puisque celui-ci n'est transmis que par les deux nervures, ou isthmes, situées de part et d'autre de chaque rainure. A l'inverse, un effort de soudage élevé est obtenu en regard des nervures. La qualité des interfaces peut donc varier d'un endroit à l'autre de l'empilement. On a représenté en figure 13, un empilement de quatre plaques rainurées 80, 81, 82, 83 qui subissent un soudage par diffusion afin de les assembler entre elles. Comme symbolisé sur cette figure, la qualité de transmission de l'effort de soudage à l'interface 810 entre les deux plaques 81, 82 varie en fonction des différentes zones en regard ou non des nervures ou isthmes.

En outre, cette hétérogénéité de transmission de l'effort de soudage pendant la fabrication de ces échangeurs de chaleur peut résulter en une déformation hétérogène de l'assemblage à l'issue du procédé de fabrication, une déformation la plus importante se produisant dans les zones ayant subi les efforts les plus importants.

Enfin, pour des applications particulièrement exigeantes, il est nécessaire de pouvoir contrôler en tout point de l'empilement la qualité des interfaces, par exemple par contrôle non destructif. Or, cela n'est pas possible avec les techniques disponibles aujourd'hui, sauf dans certains cas très précis, par exemple dans le cas de canaux peu incurvés et de dimensions suffisantes pour laisser passer des sondes de contrôle ultrasonore.

Plusieurs solutions techniques permettent, dans une certaine mesure, de résoudre plusieurs de ces problèmes. Ces solutions ont été envisagées par l'un des inventeurs de la présente demande: on peut se référer à la publication [1], aux demandes de brevet WO 2006/067349 et WO 2011/026925. Cependant, ces solutions techniques peuvent être laborieuses, onéreuses et difficiles à mettre en oeuvre dans le cas d'échangeurs à grand nombre de canaux et en outre, pas nécessairement adaptées à la réalisation d'échangeurs à faible coût mais à grande criticité d'étanchéité, tels que les échangeurs-réacteurs.

La demande de brevet FR 2936179, base pour le préambule des revendications 1 et 14, divulgue un procédé de réalisation d'un échangeur par compaction isostatique à chaud selon lequel on empile des ensembles chacun réalisé à partir d'une matrice métallique définissant des espaces dans chacun desquels est logé un conduit métallique définissant intérieurement un des canaux d'un circuit de fluide, cette matrice logeant les conduits, étant prise en sandwich entre deux plaques pleines et les extrémités de chaque conduit étant insérée dans des embouts aux extrémités latérales, avant d'appliquer le cycle CIC pour assembler par soudage-diffusion ces éléments.

Le brevet US 6467535B1 divulgue la réalisation par extrusion d'un corps d'échangeur à canaux de circulation.

Le but de l'invention est de pallier, au moins partiellement, les inconvénients inhérents au procédé d'assemblage d'échangeurs de chaleur à au moins deux circuits de fluide cités précédemment.

### Exposé de l'invention

Pour ce faire, l'invention a pour objet un procédé de réalisation d'un module d'échangeur de chaleur à au moins deux circuits de fluide comportant chacun des canaux, tel que défini dans la revendication 1, et comportant les étapes suivantes :
a) réalisation de tubes d'axes longitudinal X, dont l'intérieur constituent les canaux du premier circuit de fluide, dit premier circuit, réalisation d'au moins deux plaques pleines identiques deux à deux, dites plaques de fermeture longitudinales, et réalisation de plaques perforées dites cloisons perforées; les cloisons perforées comprenant, à chacune de leurs extrémités latérales, des premières perforations réparties sur leur largeur 12 et, des deuxième perforations réparties en rangée sur leur longueur L2, la largeur 14 des deuxièmes perforations étant supérieures à la largeur (11+ 2*e1) des tubes, les premières perforations à une extrémité latérale d'une cloison perforée étant décalées latéralement par rapport aux premières perforations à l'autre extrémité latérale de ladite cloison perforée,
b) réalisation de rives et de deux plaques perforées de trous sous la forme de grilles, dites plaques de fermeture latérale, la section transversale des trous étant sensiblement égale à celle des tubes,
c)
   - étape c1) de mise en place à chaque extrémité latérale d'une des plaques de fermeture longitudinales de plus grandes dimensions, d'une plaque de fermeture latérale,
   - étape c2) de mise en place d'une première cloison perforée sur une première plaque de fermeture longitudinale et à chacune de ses extrémités longitudinales, d'une rive, puis d'insertion d'un tube dans chaque trou de la rangée des plaques de fermeture latérale la plus proche de la première cloison perforée, en formant ainsi une première nappe de tubes, et enfin de soudure d'au moins une des extrémités des tubes à l'une des plaques de fermeture latérales dans laquelle ils sont insérés,
   - étape c3) de répétition de l'étape c2) autant de fois qu'il est nécessaire pour obtenir n nappes de tubes et au moins n cloisons perforées empilées les unes sur les autres de manière alternée, les étapes c2) et c3) étant réalisées de sorte que les premières perforations sont agencées individuellement entre deux tubes consécutifs d'une même nappe, que chaque rangée de deuxièmes perforations chevauche un tube avec un dégagement de part et d'autre de ce dernier pour le passage de fluide, et que les parties de cloison non perforées entre deux rangées de deuxième perforations chevauchent un tube; les canaux du deuxième fluide étant délimités individuellement entre deux cloisons perforées consécutives depuis une première perforation à une extrémité latérale des cloisons perforées à une première perforation décalée à l'autre extrémité latérale des cloisons perforées en passant par les deuxièmes perforations en chevauchement sur un tube;
   - étape c4) de mise en place d'une deuxième plaque de fermeture longitudinale sur le dessus de l'empilement réalisé selon l'étape c3),
d/ assemblage soit par soudage-diffusion, soit par brasage, soit par brasage-diffusion entre les différents éléments de l'empilement fermé au moins par les plaques de fermeture pour obtenir le module d'échangeur.

Par « brasage-diffusion », on entend la définition usuelle d'un homme de l'art, telle qu'explicitée dans la publication [2].

Ainsi, l'invention est essentiellement un procédé de réalisation d'un module d'échangeur de chaleur à au moins deux fluides, qui combine les avantages d'un échangeur à tubes que sont notamment une bonne étanchéité et un faible coût de réalisation et ceux d'un échangeur à plaques parmi lesquels une grande compacité.

Plus précisément, le procédé selon l'invention présente trois avantages significatifs par rapport aux procédés traditionnels de réalisation d'échangeurs de chaleur à au moins deux circuits de fluide.

Tout d'abord, le procédé selon l'invention permet de réduire de manière conséquente les coûts et délais d'approvisionnement et de réalisation des différents éléments constitutifs du module d'échangeur. En effet, seuls des plaques (tôles planes) et des tubes sont nécessaires à la fabrication d'un module d'échangeur, et ces éléments sont généralement disponibles sur stock dans de grandes variétés dimensionnelles et de matériau. De plus, l'utilisation de tubes et plaques préexistants évite les étapes de gravure par usinage chimique ou mécanique de canaux, étape coûteuse et pouvant induire d'importants délais.

De plus, du fait que le premier circuit de fluides est complètement défini par l'intérieur de de tubes, son étanchéité vis-à-vis du/des autre(s) circuit(s) est garantie. De ce fait, les performances en termes de sécurité sont fortement améliorées par rapport à un échangeur à plaques et corollairement, les exigences sur l'état de surface des pièces à assembler sont bien moins contraignantes. En effet, dans le cas d'échangeurs à plaques assemblées par soudage-diffusion, par exemple par CIC, la présence d'un défaut, de type rayure de manutention par exemple, entre un canal et la périphérie de l'échangeur peut ne pas disparaître lors du soudage. Ainsi, une fuite peut survenir entre l'un des circuits et l'extérieur de l'échangeur du fait de la présence de ce défaut de soudage et entraîner la mise au rebut de l'ensemble de l'échangeur car ce type de défaut n'est pas réparable par d'autres étapes de soudage-diffusion. A contrario, le maintien d'un des fluides à l'intérieur des tubes dans un module selon l'invention résout ipso facto ce problème d'étanchéité. Il en résulte des prescriptions sur l'état de surface des éléments de l'échangeur bien moins drastiques, d'où une économie qui peut être substantielle et une facilité de mise en oeuvre augmentée.

Enfin, le procédé selon l'invention répond, au moins partiellement, au problème de la transmission de pression nécessaire au bon soudage, ainsi qu'au problème de déformation excessive des canaux lors de l'utilisation d'un procédé d'assemblage par soudage-diffusion selon l'état de l'art. En effet, préalablement à l'empilement des nappes de tubes entre les cloisons perforées, il est possible pour chaque tube, dans le cas où il est obturé à l'une de ses extrémités, de le mettre sous pression. L'empilement successif des tubes sous pression et des cloisons perforées se fait ensuite.

La pression interne aux tubes permet alors :
- une maitrise de leur déformation, la pression interne permettant de limiter les efforts extérieurs lors du soudage-diffusion, par exemple lors de la CIC ;
- une meilleure transmission de la pression appliquée lors du soudage-diffusion du fait de la rigidité des tubes induite par leur mise sous pression.

De préférence, avant l'étape c1), on réalise une étape de nettoyage des tubes, des cloisons perforées, des plaques de fermeture.

Selon une première alternative de l'invention, l'étape a) comprend la réalisation de deux plaques de fermeture longitudinale sur les côtés longitudinaux, et l'étape d) d'assemblage est réalisée entre les différents de l'empilement fermé par les plaques de fermeture longitudinales, les rives et les deux plaques de fermeture latérales.

Selon une première alternative de l'invention, l'étape a) comprend la réalisation de quatre plaques de fermeture longitudinale, l'étape c4) comprend la mise en place des deux plaques de fermeture longitudinale sur les côtés longitudinaux, et l'étape d) d'assemblage est réalisée entre les différents de l'empilement fermé par les quatre plaques de fermeture longitudinales et les deux plaques de fermeture latérales. Cette deuxième alternative est plus particulièrement avantageuse pour les modules d'échangeurs à grandes dimensions, c'est-à-dire avec un grand nombre d'éléments, car l'utilisation des plaques pleines qui viennent fermer les côtés longitudinaux de l'empilement permet de souder toutes les plaques de fermeture entre elles et donc de réduire les longueurs de soudure à réaliser. Par conséquent, le temps de soudure est réduit et au final le prix de réalisation d'un module d'échangeur est moindre.

Selon un mode de réalisation avantageux, l'étape d) d'assemblage est réalisée par soudage-diffusion, l'étape c2) comprend la soudure d'au moins une des extrémités des tubes à l'une des plaques de fermeture latérales dans laquelle ils sont insérés.

Selon ce mode, après l'étape c4), on réalise de préférence une étape de soudure c5) des quatre plaques de fermetures longitudinales entre elles.

Toujours selon ce mode, on réalise de préférence, après l'étape c4) ou le cas échéant l'étape c5), une étape c6) de dégazage de l'intérieur de l'empilement par un orifice de dégazage débouchant vers l'extérieur, puis une étape c7) de fermeture de l'orifice de dégazage.

Selon une variante avantageuse, l'étape d) est un cycle de compression isostatique à chaud CIC, dit cycle à basse pression, réalisé à une pression comprise entre 10 et 800 bar, de préférence compris entre 40et 400 bar. Le cycle de CIC basse pression selon l'étape d) est réalisé de préférence à une température comprise entre 450°C et 1200°C et de préférence, pendant une durée comprise entre 15 min et 10 heures de préférence entre 30 min et 4h.

Après l'étape d), on réalise avantageusement une étape e) de perçage d'orifices sur les faces supérieure et/ou inférieure du module d'échangeur, les orifices réalisés étant en communication fluidique respectivement avec les perforations de l'une et/ou l'autre des cloisons perforées de dessus et/ou du dessous.

Selon une autre variante avantageuse, après l'étape e), on réalise une étape f) d'application d'un cycle de compression isostatique à chaud (CIC), dit cycle CIC à haute pression au module déjà assemblé. Le cycle de CIC selon l'étape f) est de préférence réalisé à une pression comprise entre 400 et 2000 bar, de préférence entre 800 et 1500 bar, de préférence à une température comprise entre 450°C et 1200°C et de préférence pendant une durée comprise entre 15 min et 10 heures de préférence entre 30 min et 4h.

Toujours selon ce mode, et selon une variante avantageuse, le procédé comprend une étape de soudage de collecteurs de fluide sur le module assemblé selon l'étape d), un collecteur de fluide étant apte à distribuer ou récupérer un fluide circulant dans le premier ou le deuxième circuit.

Selon encore une autre variante avantageuse, on soude à l'une des extrémités de chaque tube un bouchon, l'empilement des nappes de tubes selon les étapes c2) et c3) étant réalisés de telle sorte qu'on insère une extrémité débouchante des tubes d'une nappe dans une des plaques de fermeture latérale et on insère l'extrémité des tubes obstruée par les bouchons de la nappe consécutive dans la même plaque de fermeture latérale. Chaque bouchon peut être percé d'un trou.

De préférence, toutes les extrémités des tubes, débouchantes ou le cas échéant obstruées par un bouchon sont soudées aux plaques de fermeture latérale avant l'étape d'assemblage d).

Selon un autre mode de réalisation avantageux, l'étape d) d'assemblage est réalisée par brasage ou par brasage-diffusion, et entre les étapes b) et c), on réalise un dépôt de brasure soit sur toute la surface extérieure des tubes et sur les faces longitudinales des rives, soit sur les surfaces des plaques perforées et sur la surface extérieure des tubes dans leur partie insérée dans les plaques de fermeture latérales, et un dépôt de brasure sur les faces internes des plaques de fermeture longitudinales.

Selon cet autre mode, l'étape d) d'assemblage consiste avantageusement en un traitement de brasage en une seule étape à une température comprise entre 100°C et 1200°C pour une durée comprise entre 15 min et 20h, de préférence entre 15 min et 3h.

L'invention concerne également un module d'échangeur de chaleur à au moins deux circuits de fluide obtenu selon le procédé tel que décrit précédemment, voir la revendication 14. L'invention concerne enfin un système d'échangeur de chaleur comprenant une pluralité de modules comme ci-dessus reliés entre eux.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue en perspective d'un tube métallique pour la réalisation du premier circuit de fluide C1 d'un module d'échangeur de chaleur à deux circuits de fluide selon l'invention,
- la figure 1A est une coupe transversale du tube selon le plan A1 de la figure 1,
- la figure 1B est une vue de détail du tube selon B de la figure 1,
- la figure 2 est une vue de dessus d'une cloison métallique perforée séparant deux nappes consécutives de tubes selon la figure 1, pour la réalisation du deuxième circuit de fluide C2 d'un module d'échangeur de chaleur à deux circuits de fluide selon l'invention,
- la figure 2A est une vue de détail de la cloison perforée selon C de la figure 2,
- la figure 2B est une vue de détail de la cloison perforée selon D de la figure 2,
- la figure 3 est une vue en perspective d'une rive métallique pour la fermeture longitudinale d'un module d'échangeur de chaleur à deux circuits de fluide selon l'invention,
- la figure 4 est une vue en perspective d'une plaque de fermeture latérale sur laquelle est soudée l'une des extrémités de tubes selon la figure 1 pour la fermeture latérale d'un module d'échangeur de chaleur à deux circuits de fluide selon l'invention,
- la figure 4A est une vue de détail de la plaque de fermeture latérale selon E de la figure 4.
- la figure 5 est une vue en perspective montrant l'étape achevée de mise en place d'une première nappe de tubes selon la figure 1 dans les plaques de fermeture latérales selon la figure 4 avec intercalage d'une cloison perforée selon la figure 2, les extrémités longitudinales étant fermées chacune par une rive selon la figure 3,
- la figure 5A est une vue de détail selon F de la figure 5,
- la figure 5B est une vue de dessus d'une nappe de tubes montrant la circulation de fluide au sein du deuxième circuit C2 défini par les cloisons perforées et l'extérieur des tubes,
- la figure 6 est une vue en perspective montrant l'étape achevée de mise en place d'une nappe de tubes supplémentaire au-dessus de la nappe selon la figure 5,
- la figure 6A est une vue de détail selon G de la figure 6.
- la figure 7 est une vue en perspective montrant l'empilement achevé de l'ensemble des nappes de tubes, fermé longitudinalement par les plaques de fermeture longitudinales et par les rives et fermé latéralement les plaques de fermeture latérales sur lesquelles sont soudées les tubes avant un premier cycle de CIC du procédé selon l'invention,
- la figure 8 présente en vue de perspective un module d'échangeur non fini selon l'invention, tel qu'il est obtenu à partir de l'empilement selon la figure 7 et après réalisation des ouvertures du deuxième circuit de fluide C2 sur les plaques de fermeture longitudinales,
- la figure 9 présente en vue de perspective un module d'échangeur fini selon l'invention, tel qu'il est obtenu à partir de l'échangeur non fini de la figure 8 et après découpe des ouvertures du premier circuit de fluide C1,
- la figure 10 est une vue de perspective d'une variante de réalisation des tubes selon l'invention, dont l'intérieur délimite le premier circuit de fluide C1,
- la figure 11 montre en vue de perspective et en coupe longitudinale une variante de réalisation des cloisons perforées selon l'invention définissant en partie le deuxième circuit de fluides C2,
- la figure 12 est une vue de perspective d'une variante de réalisation des collecteurs du deuxième circuit de fluides C2, tels qu'ils sont agencés sur un module d'échangeur fini selon l'invention,
- la figure 13 est une vue en coupe transversale d'un module d'échangeur selon l'état de l'art réalisé par CIC, montrant les différentes zones de transmission de l'effort de soudage.

Les termes « longitudinal » et « latéral » sont à considérer en relation avec la forme géométrique des éléments métalliques qui déterminent la forme géométrique des empilements du module d'échangeur thermique selon l'invention. Ainsi, au final les quatre côtés longitudinaux de l'empilement du module d'échangeur selon l'invention sont ceux qui s'étendent parallèlement à l'axe X longitudinal des tubes 10, c'est-à-dire selon leur longueur L1. Les deux côtés latéraux de l'empilement sont ceux qui s'étendent orthogonalement à l'axe longitudinal X des tubes, c'est-à-dire selon la dimension la plus grande 16 des plaques de fermeture latérales 40. Les dimensions longueur, largeur et épaisseur ou hauteur pour chaque élément pour la réalisation d'un module d'échangeur sont données relativement à la longueur de l'échangeur définie par la longueur des tubes et la largeur de l'échangeur définie par la largeur des nappes de tubes empilées.

Les termes « supérieur », « inférieur », « dessus », « dessous » sont à considérer par rapport à la direction d'empilement des différents éléments destinés à constituer un module d'échangeur selon l'invention.

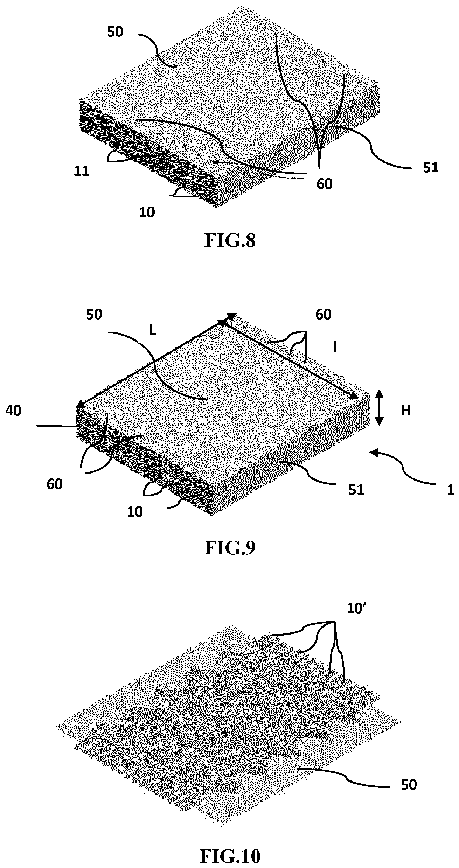

On présente ci-après un exemple de réalisation d'un module d'échangeur 1 à deux circuits selon l'invention par Compression Isostatique à Chaud (CIC), les canaux du premier circuit de fluides C1 étant définis par l'intérieur d'un nombre égal à 133 tubes par soudage diffusion. Les dimensions globales du module d'échangeur 1 fini, i.e. après sa fabrication, sont représentées en figure 9 et sont une longueur L, c'est-à-dire la dimension suivant l'axe longitudinal X des tubes 10, une largeur 1, c'est-à-dire la dimension suivant la largeur des nappes de tubes et une hauteur H. Avec les données indiquées ci-après, les dimensions L*1*H du module d'échangeur 1 sont les suivantes: 320*278*54 mm.

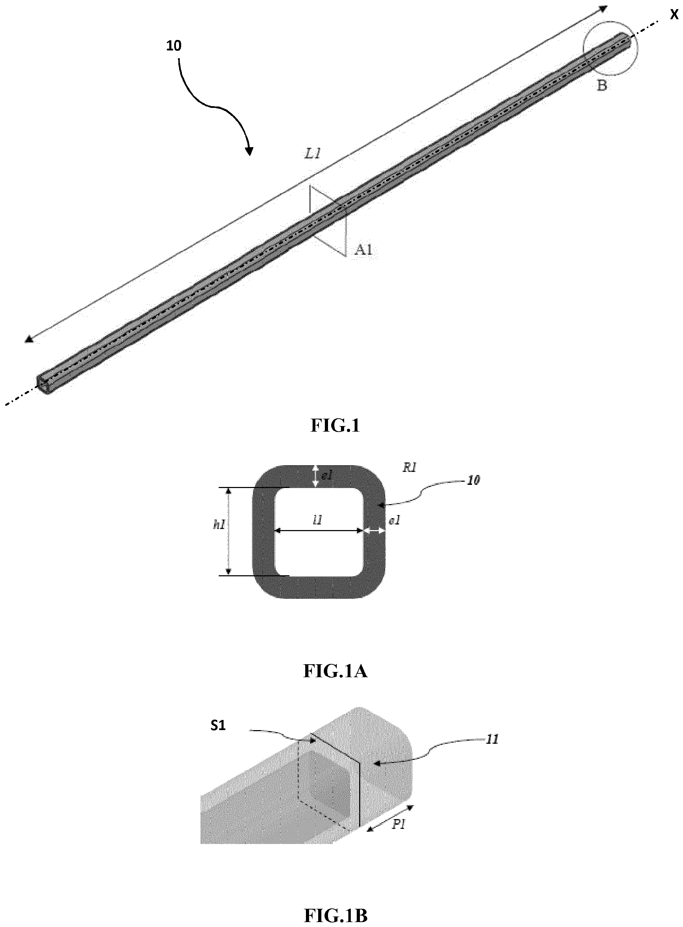

Etapes a): On réalise tout d'abord des tubes 10 débouchant à leurs deux extrémités. Dans l'exemple considéré, les tubes 10 sont droits et allongés selon un axe longitudinal X. Tel qu'illustré en figures 1 et 1A, les tubes 10 sont de section transversale parallélépipédique avec une largeur nominale 11 et une hauteur nominale h1 pour une épaisseur de paroi e1.

On veille à réduire les rayons R1 en coin des tubes du côté de l'intérieur du canal sans endommager l'intégrité des tubes lors de leur mise en forme. L'intérieur des tubes 10 constitue ainsi les canaux du premier circuit de fluides C1.

Des bouchons 11 de longueur P1 peuvent avantageusement être soudés individuellement à l'une des extrémités des tubes selon une ligne de soudure S1 (figure 1B). Comme expliqué par la suite, de tels bouchons 11 permettent de faciliter les étapes ultérieures de fabrication, notamment les étapes de soudure conventionnelle afin de permettre l'encapsulation de l'échangeur avant le soudage diffusion par CIC (étapes c2) à c4)). Pour des questions de facilité de représentation, la section des bouchons 11 est représentée identique à celle des tubes 10. On peut en pratique prévoir que les bouchons 11 ne présentent pas d'arrondis sur leurs arêtes mais qu'ils aient une largeur correspondant à une valeur égale à 11 + 2*e1 et une hauteur correspondant à h1 + 2*e1. La soudure entre l'extrémité d'un tube 10 et un bouchon 11 doit être hermétique et la longueur d'un tube 10 plus celle du bouchon 11 qui y est soudé doit être égale à L1 (figure 1).

A titre d'exemple, les tubes 10 sont en acier inoxydable 1.4404 avec une épaisseur de paroi e1 égale à 1mm et une forme initiale cylindrique, qui sont mis en forme par étirage afin d'obtenir une section nominale finale 11 = h1 = 4mm avec un rayon en coin de 0,5mm du côté de l'intérieur du tube. Les tolérances sur les dimensions finales extérieures sont égales à ±0,1mm. Les bouchons 11 sont en acier inoxydable 1.4404 et sont soudés par soudage TIG (acronyme anglais pour « *Tungsten Inert Gas* ») selon une ligne de soudure S1 sur l'extrémité du tube 10 (figure 1B). La longueur L1 est égale à 330 mm.

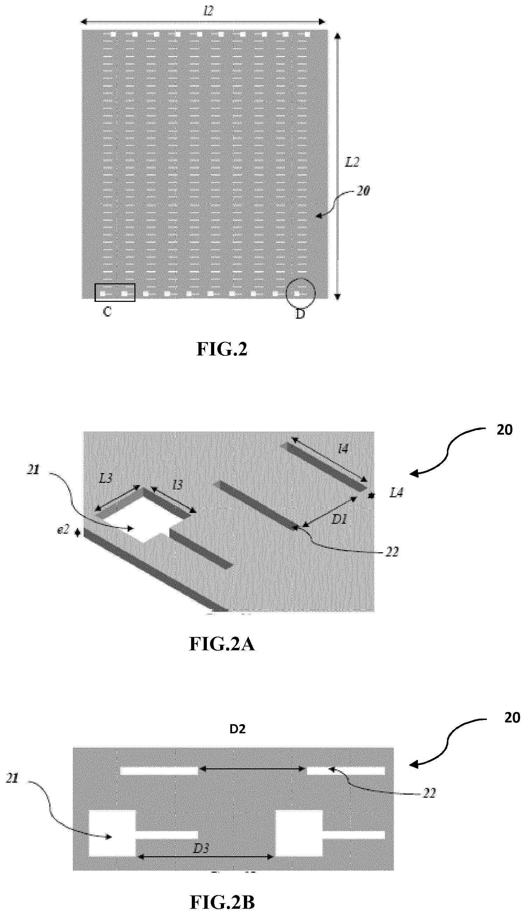

On réalise également des cloisons intérieures perforées 20 sous la forme de plaques planes de longueur L2 et de largeur 12 (figure 2) et une épaisseur e2 (figure 2A). Comme expliqué par la suite, dans le procédé selon l'invention, ces cloisons perforées 20 sont destinées à être insérées entre les différentes nappes de tubes 10 empilées.

Les perforations débouchantes 21, 22 réalisées à travers l'épaisseur des cloisons 20 sont adaptées pour permettre la circulation et la collecte du fluide C2 (figures 2A et 2B). Plus précisément, les perforations débouchantes sont rectangulaires et sont de deux types:
- les perforations 21 de longueur L3 et de largeur 13 réalisées uniquement à chaque extrémité latérale de la plaque 20, régulièrement espacées les unes des autres à une extrémité latérale de la cloison 20 (figures 2A et 2B). L'espacement entre deux perforations 21 consécutives est égal à D3, dans le sens de la largeur 12 de la plaque (figure 2B);
- les perforations 22 de longueur L4 et de largeur 14 réalisées sur toute la longueur L2 de la cloison 20, régulièrement espacées les unes des autres. L'espacement entre deux perforations 22 consécutives est égal à D2 dans le sens de la largeur 12 de plaque 20 (figure 2B) et est égal à D1 dans le sens de la longueur L2 de plaque 20 (figure 2A). Comme explicité par la suite, la largeur 14 des découpes 22 est adaptée pour permettre la distribution de fluide entre deux canaux consécutifs du deuxième circuit de fluides C2 qui sont situés sur une même nappe du module d'échangeur 1.

Dans l'exemple illustré, les perforations 21 d'extrémité ont chacune une forme carrée prolongée d'une fente rectangulaire, de la forme d'une perforation 22. La forme principale des perforations 21 peut aussi être rectangulaire (dimensions L3*13). On peut en outre envisager des perforations 21 uniquement carrées ou rectangulaires, i.e. sans fentes rectangulaires prolongeant les perforations 21.

A titre d'exemple, les cloisons perforées 20 sont en acier inoxydable 1.4404 de dimensions L2 * 12 * e2 égales à 300 * 274 * 1 mm. Les perforations 21 et 22 sont réalisées par découpe laser avec des tolérances de ±0,1mm.

Les dimensions 13*L3 des perforations 21 sont égales à 6*6mm, et leur espacement D3 dans le sens de la largeur de cloison 20 est égal à 18mm.

Les dimensions 14*L4 des perforations 22 sont égales à 10*1 mm, leur espacement D2 dans le sens de la largeur de cloison 20 est égal à 14 mm tandis que leur espacement D1 dans le sens de la longueur de cloison 20 est égal à 7,3 mm.

Etapes b) : On réalise également des pièces qui permettent le montage des tubes 10 et des cloisons intérieures perforées 20 afin de constituer l'assemblage définitif du module d'échangeur.

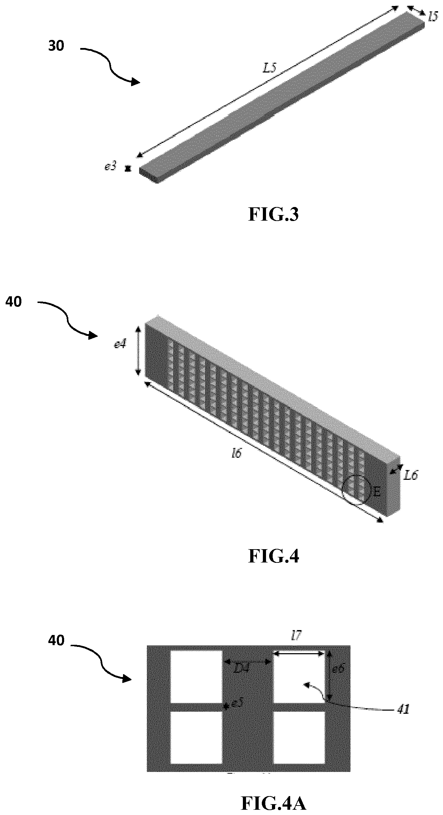

On réalise ainsi des rives 30 massives de longueur L5, largeur 15 et épaisseur e3 (figure 3). Ces rives 30 permettent de fermer longitudinalement le module d'échangeur, c'est-à-dire qu'elles réalisent les bords longitudinaux du module d'échangeur. L'épaisseur e3 d'une rive correspond à l'épaisseur totale d'un tube 10 après sa mise en forme, soit e3 = h1 + 2*e1.

On réalise aussi deux plaques de fermeture latérale 40 de dimensions L6 x 16 x e4 (figure 4). Ces plaques de fermeture latérale 40 permettent de fermer les deux extrémités latérales du module d'échangeur, de maintenir les tubes 10 en position espacée les uns des autres dans une même nappe et de maintenir deux nappes de tubes 10 parallèles entre elles à une distance permettant l'insertion d'une cloison perforée 20.

Ces plaques de fermeture latérale 40 sont percées de trous débouchant 41 de section identique à celles des tubes 10 et/ou des bouchons 11. Le nombre de trous 41 réalisés correspond au nombre de tubes 10 utilisés pour la réalisation du module d'échangeur. Ainsi, les plaques 40 présentent une structure de grille. Les trous 41 présentent une largeur 17 sur une hauteur e6 (figure 4A), sont régulièrement espacés d'une longueur D4 suivant la largeur 16 de plaque 40 et d'une hauteur e5 suivant la hauteur e4 de plaque 40 (figure 4A). L'espacement D4 entre deux trous 41 consécutifs est égal à la largeur 13 de la découpe 21 (figure 2A).

On réalise enfin l'enveloppe de fermeture longitudinale qui permet l'étanchéité à la pression dans l'enceinte qui met en oeuvre un cycle CIC. Cette enveloppe de fermeture longitudinale est constitué de quatre plaques pleines 50, 51 de même épaisseur égale à e6 et de longueur égale à celle d'une cloison perforée 20 à laquelle s'ajoutent celles des deux plaques de fermeture latérale, soit une longueur égale à L2 + 2 *L6. Deux plaques de fermeture longitudinale 50 présentent la même largeur 12 que celle des cloisons perforées 20 tandis que les deux autres 51 présentent une largeur égale à e4 + e6.

A titre d'exemple, les rives 30 et les plaques de fermeture 40 réalisées dans cette étape b) sont en acier inoxydable 1.4404, et respectivement de dimensions L5 * 15 * e3 égales à 300 * 20 * 6 mm et L6 * 16 * e4 égales à 15 * 274 * 50 mm. Les trous 41 sont réalisées par usinage mécanique avec des tolérances de +0,1/-0 mm. Les dimensions des trous 41 sont les suivantes 17 = e6 = h1 + 2* e1 = 6 mm. L'espacement D4 entre deux trous 41 consécutifs dans le sens de la largeur est égal à 6mm tandis que celui e5 entre deux trous consécutifs 41 dans le sens sa la hauteur est égal à l'épaisseur e2 des cloisons perforées 20, soit 1mm.

Pour ce qui est de l'enveloppe de fermeture, les plaques 50, 51 sont également en acier 1.4404 d'épaisseur e6 égale à 2 mm, de longueur L2 + 2 * L6 égale à 330 mm. Les deux plaques 50 ont une largeur de 274 mm et les deux plaques 51 ont une largeur e4 + e6 égale à 52 mm.

Etapes c) : On réalise ensuite le montage par empilement des différentes pièces 10, 20, 30, 40, 50, 51 qui viennent d'être décrits pour constituer un module d'échangeur.

Au préalable, on réalise un nettoyage à l'aide de solvants et/ou de détergents de l'ensemble des pièces 10, 20, 30, 40, 50, 51.
Etape c1) : on dispose à chacune des deux extrémités latérales d'une plaque de fermeture longitudinale 50, de largeur 16, une plaque de fermeture latérale 40.
Etape c2) : on dispose sur la plaque de fermeture longitudinale 50, une première cloison perforée 20 ainsi que deux rives 30 de part et d'autre de cette cloison 20. Les rives 30 et la première cloison perforée 20 sont alignées les unes par rapport aux autres grâce à des pions de centrage non représentés.

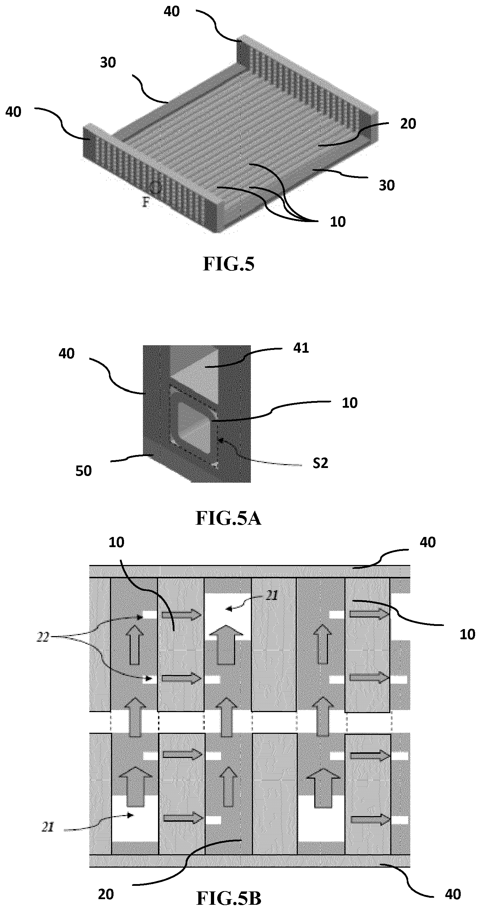

On insère alors dans chacun des trous 41 de la rangée la plus proche de la première cloison perforée 20, un tube 10. Tous les tubes 10 sont insérés dans les trous 41 en étant orientés dans le même sens, c'est-à-dire avec leurs extrémités non obturées par un bouchon 11 insérées dans la même plaque de fermeture latérale 40 (figures 5 et 5A).

Afin de maintenir les tubes 10 en place, leur extrémité non obturée est soudée, par exemple par soudage TIG, suivant le profil S2 sur la plaque de fermeture latérale 40 (figure 5A). L'autre extrémité des tubes 10, c'est-à-dire celle obturée par un bouchon 11, est soudée ultérieurement sur la seconde plaque de fermeture latérale 40. On a ainsi réalisé une première nappe de tubes 10 et son montage sur une cloison perforée 20.

La figure 5B illustre la circulation du fluide au sein de canaux du deuxième circuit C2 définis par l'extérieur d'une nappe de tubes 10 et une cloison perforée 20 placée en dessous.

Comme symbolisé par les flèches les plus grosses sur cette figure 5B, les perforations 21 permettent l'admission du deuxième fluide C2 depuis une extrémité latérale d'un module d'échangeur 1 et son extraction par l'autre extrémité latérale. Ainsi, plus précisément, l'admission du deuxième fluide C2 se fait à une extrémité d'un des canaux délimité longitudinalement par deux tubes consécutifs 10 et son extraction se fait à une extrémité opposée dans le canal consécutif délimité par l'un des deux tubes consécutifs 10 et celui encore consécutif. Ainsi, l'amenée du deuxième fluide C2 d'un canal à l'autre consécutif se fait par les perforations 22, comme symbolisé par les flèches de gauche à droite en figure 5B.
Etape c3) : on réalise une deuxième nappe de tubes 10 et son montage sur une deuxième cloison perforée 20.

Ainsi, une deuxième cloison perforée 20 est disposée sur la première nappe de tubes 10 puis deux autres rives 30 sont disposées de chaque côté longitudinal de cette dernière.

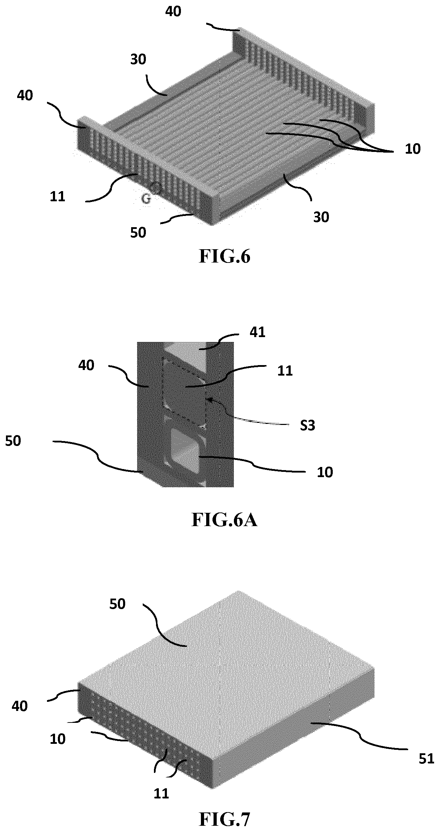

On insère alors dans chacun des trous 41 de la rangée la plus proche de la deuxième cloison perforée 20, un tube 10. Tous les tubes 10 sont insérés dans les trous 41 en étant orientés dans le même sens, mais tête-bêche, c'est-à-dire en sens inverse des tubes 10 de la première nappe (figures 6 et 6A). Ainsi, les extrémités obturées par les bouchons 11 des tubes 10 qui constituent la deuxième nappe sont disposées du côté des extrémités débouchantes des tubes de la première nappe (figure 6A).

Les bouchons 11 obturant les tubes 10 de cette deuxième nappe sont alors soudés, par exemple par soudage TIG, sur la même plaque de fermeture latérale 40 que ceux de la première nappe, selon un profil S3 (figure 6A). L'autre extrémité des tubes 10 de cette deuxième nappe est soudée ultérieurement sur la seconde plaque de fermeture latérale 40.

On répète autant de fois qu'il y a de nappes de tubes 10 suivantes à réaliser et de montage sur les cloisons perforées 20, l'empilement des nappes étant réalisé en alternant l'orientation des tubes 10 d'une nappe à l'autre, c'est-à-dire en insérant alternativement les extrémités débouchantes des tubes 10 et les bouchons 11 des tubes de la nappe suivante dans une même plaque de fermeture latérale 40.

Une fois l'empilement terminé des nappes de tubes 10 alterné avec les cloisons perforées 20, on réalise le soudage, par exemple un soudage TIG, de l'ensemble des extrémités des tubes 10 non encore soudées sur la plaque de fermeture 40 dans laquelle ils sont insérés. L'alternance entre des extrémités de tubes 10 non fermées pour une nappe et des extrémités obturées par les bouchons 11 pour la nappe empilée consécutivement facilite cette étape de soudure en permettant d'augmenter les intensités mises en jeu et ainsi d'améliorer la qualité de la soudure.
Etape c4) : on dispose ensuite la seconde plaque de fermeture longitudinale 50 de largeur 16 sur le dessus de l'empilement et les deux plaques de fermeture longitudinale 51 sur les côtés longitudinaux du module d'échangeur.
Etape c5) : on réalise ensuite un cordon de soudure continu sur le pourtour des quatre plaques 50, 51 constituant ainsi l'enveloppe de fermeture (figure 7).
Etape c6) : on dégaze l'ensemble des interfaces situées à l'intérieur des plaques 50, 51 de l'enveloppe de fermeture et des plaques de fermeture latérale 40 à travers un orifice débouchant non représenté. Cet orifice débouchant peut avantageusement être réalisé sur la plaque 50 du dessus.
Etape c7) : on ferme l'orifice débouchant.
Etape d) : on soumet l'assemblage à un cycle de compression isostatique à chaud (CIC) dit à basse pression, comprenant un chauffage en 2h à 1020°C sous 100bar, un palier d'une heure à 1020°C sous 100 bar puis un refroidissement en plusieurs heures et enfin une dépressurisation.
Etape e) : on réalise le perçage des orifices 60 sur les faces supérieure et/ou inférieure du module d'échangeur, les orifices 60 réalisés étant en communication fluidique avec les perforations 21 de l'une et/ou l'autre des cloisons 20 du dessus et/ou du dessous (figure 8). Dans l'exemple illustré, la réalisation des orifices 60 est faite à la fois sur la face supérieure et sur la face inférieure, i.e. à la fois dans la plaque 50 du dessus et celle du dessous. Mais, on peut envisager de réaliser ces orifices 60 sur une seule des faces supérieure ou inférieure.
Etape f): on réalise enfin l'application d'un cycle de compression isostatique à chaud (CIC), dit à haute pression, à l'empilement déjà assemblé. Ce cycle CIC à haute pression comprend un chauffage à 1080°C sous une pression de 1000 bar pendant une durée de 3h.
Etape g): L'ouverture de l'ensemble des tubes 10 sur chaque face de l'échangeur est alors réalisée par découpe des extrémités latérales de l'empilement qui les obturent (figure 9). Plus précisément, on réalise une découpe d'une bande latérale de part et d'autre de l'empilement sur toute la largeur 1, la bande étant de largeur au moins égale de préférence sensiblement égale à la longueur P1 des bouchons 11. La longueur L de l'échangeur est ainsi égale à (L2 + 2*L6) - (2*P1), soit 320 mm dans l'exemple précité.

Le module d'échangeur 1 selon l'invention est ainsi fini.

D'autres variantes et améliorations peuvent être envisagées par rapport à l'exemple illustré aux figures 1 à 9 sans pour autant sortir du cadre de l'invention.

Ainsi, en particulier, si dans l'exemple illustré aux figures 1 à 9, les tubes 10 utilisés sont droits, on peut envisager de multiples formes de génératrices pour ces tubes, notamment à courbe simple, ou à courbes multiples. On peut ainsi envisager des tubes 10' de forme allongée à motif en zigzag comme montré en figure 10.

Dans l'exemple illustré aux figures 1 à 9, il est prévu des tubes 10 comportant un bouchon plein soudé à l'une de leurs extrémités. On peut envisager d'utiliser des tubes débouchant, i.e. non obturé par un bouchon 11, à leurs deux extrémités. On peut aussi envisager d'utiliser des bouchons 11 soudés individuellement aux deux extrémités des tubes 10, avec au moins un de ces bouchons 11 percé d'un trou. Selon cette variante à bouchon à trous, la quantité de matière étant plus importante, la réalisation des soudures des tubes 10 sur les plaques de fermeture latérale 40 est facilitée. De plus, dans le cas d'un assemblage réalisé par soudage-diffusion par CIC, un trou dans un bouchon 11 permet au gaz de pénétrer à l'intérieur des tubes, comme dans l'exemple illustré aux figures 1 à 9.

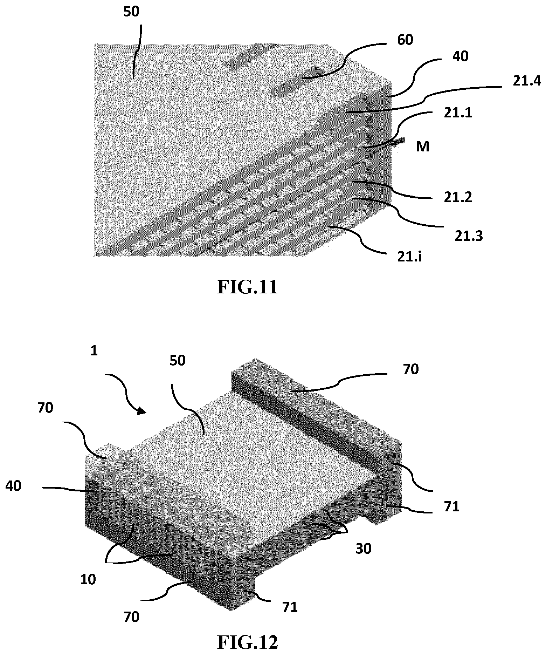

Dans l'exemple illustré aux figures 1 à 9, toutes les perforations 21 ont des dimensions identiques. En variante, il est possible de réaliser des perforations de longueur L3 différentes suivant l'emplacement des cloisons perforées 20 dans l'empilement. En particulier, il est avantageux de réaliser des perforations 21 identiques pour les cloisons qui sont symétriques par rapport au milieu M du module 1 : cela est montré en figure 11 sur laquelle on peut voir que la longueur L3 d'une perforation 21.i réalisée sur la i^{ème} cloison inférieure 20 est identique à celle de la i^{ème} cloison supérieure 21.i. On peut avantageusement doubler la longueur de perforations d'une perforation 21.2 à celle consécutive 21.3 : ainsi la longueur des perforations 21.n est alors avantageusement égale à n* L3 pour les n^{ième}s cloisons agencées de part et d'autre du milieu M du module 1. Cette variante pour la réalisation des perforations 21, 21.2, ...21.i,...21.n permet une meilleure admission et extraction du fluide C2 dans le deuxième circuit.

Par ailleurs, la compacité et l'intégrité d'un module d'échangeur 1 selon l'invention après fabrication peuvent également être optimisées en intégrant les collecteurs du fluide du deuxième circuit C2 directement pendant les phases de montage et d'assemblage par soudage-diffusion. Cette variante a pour avantage une mise en place aisée des collecteurs. On a représenté en figure 12 un exemple de cette mise en place de collecteurs 70 du fluide C2. Les quatre collecteurs de fluide 70 sont agencés de part et d'autre de l'empilement constituant le module 1 avec leur canal 71 d'amenée ou de récupération de fluide qui débouche directement sur les orifices 60 réalisés sur les faces inférieure et supérieures du module 1. On peut aussi envisager de réaliser des collecteurs latéraux pour sortir les deux fluides du même côté du module d'échangeur (débouchure canaux 10, c'est-à-dire avec une circulation des fluides vers le collecteur parallèle au sens de circulation en partie courante). De manière générale, on peut envisager toute autre géométrie de collecteurs.

Au lieu de les assembler par soudage-diffusion au cours de l'assemblage du modulé d'échangeur 1, les collecteurs 70 de deuxième circuit de fluide C2 peuvent également être rapportés par boulonnage pour pouvoir procéder à leur montage/démontage.

Les modules d'échangeurs de chaleur obtenus selon le procédé de l'invention peuvent être assemblés les uns aux autres, par exemple en utilisant des brides ou en soudant les tuyauteries d'amenée de fluides. On peut ainsi envisager de réaliser un système échangeur de chaleur à plusieurs modules reliés entre eux dans lequel les échanges se font en plusieurs étapes avec des températures moyennes différentes ou des écarts de température par module suffisamment réduits pour diminuer les contraintes thermiques dans les matériaux. Par exemple, dans le cas d'un échangeur de chaleur dans lequel on désire transférer la chaleur d'un premier fluide à un second, on peut concevoir un système d'échangeur modulaire dans lequel chaque module permet de diminuer la température du premier fluide d'une valeur donnée, limitant ainsi les contraintes par rapport au cas d'une conception à un seul module présentant un écart de température plus élevé. Pour cela, la température d'entrée du second fluide peut différer d'un module à l'autre. Dans un autre exemple, un système de réacteur-échangeur modulaire permet de mener une réaction chimique complexe par étages en contrôlant précisément la température de réaction à chaque étage, pour un contrôle optimal de la réaction chimique, une minimisation des risques et une maximisation des rendements.

Un système d'échangeurs de chaleur à plusieurs modules permet aussi de diminuer les coûts de maintenance, en permettant le remplacement individuel d'un module défaillant, voire les coûts de fabrication par standardisation des modules.

De manière générale, l'invention qui vient d'être décrite peut être appliquée avantageusement pour la fabrication d'échangeurs qui nécessitent un faible coût industriel sans forte exigences thermo-hydrauliques, mais une grande criticité d'étanchéité, ce qui est le cas en particuliers pour les échangeurs-réacteurs.

D'autres variantes et améliorations peuvent être prévues sans pour autant sortir du cadre de l'invention.

L'invention n'est pas limitée aux exemples qui viennent d'être décrits ; on peut notamment combiner entre elles des caractéristiques des exemples illustrés au sein de variantes non illustrées.

Au lieu d'une étape d) d'assemblage par soudage-diffusion obtenue par CIC comme dans l'exemple illustré, on peut aussi envisager de réaliser cette étape par brasage ou par brasage-diffusion, avec entre les étapes b) et c), un dépôt de brasure soit sur toute la surface extérieure des tubes 10 et sur les faces longitudinales des rives 30, soit sur les surfaces des plaques 20 perforées et sur la surface extérieure des tubes 10 dans leur partie insérée dans les plaques de fermeture latérales 40, et un dépôt de brasure sur les faces internes des plaques de fermeture longitudinales 50.

Le traitement de brasage est alors avantageusement réalisé en une seule étape à une température comprise entre 100°C et 1200°C pour une durée comprise entre 15 min et 20h, de préférence entre 15 min et 3h.

### REFERENCES CITEES

*[1]* «Fusion reactor first wall fabrication techniques» de G. Le Marois, E. Rigal, P. Bucci, (Fusion Engineering and Design pp 61-62 (2002) 103-110 Elsevier Science B.V);
[2] « *Assemblage par diffusion* » *-* Techniques de l'ingénieur [BM 7747].

## Revendications

1. Procédé de réalisation d'un module d'échangeur de chaleur à au moins deux circuits de fluide comportant chacun des canaux, comportant les étapes suivantes :
a) réalisation de tubes (10) d'axes longitudinal X, dont l'intérieur constituent les canaux du premier circuit de fluide (C1), dit premier circuit, réalisation d'au moins deux plaques pleines (50, 51) identiques deux à deux, dites plaques de fermeture longitudinales, et **caractérisé en ce qu'**il comporte les étapes suivantes :
réalisation de plaques perforées (20) dites cloisons perforées; les cloisons perforées comprenant, à chacune de leurs extrémités latérales, des premières perforations (21) réparties sur leur largeur 12 et, des deuxième perforations (22) réparties en rangée sur leur longueur L2, la largeur 14 des deuxièmes perforations étant supérieures à la largeur (11+ 2*e1) des tubes (10), les premières perforations à une extrémité latérale d'une cloison perforée étant décalées latéralement par rapport aux premières perforations à l'autre extrémité latérale de ladite cloison perforée,
b) réalisation de rives (30) et de deux plaques (40) perforées de trous (41) sous la forme de grilles, dites plaques de fermeture latérale (40), la section transversale des trous (41) étant sensiblement égale à celle des tubes (10),
c)
- étape c1) de mise en place, à chaque extrémité latérale d'une des plaques de fermeture longitudinales (50) de plus grandes dimensions, d'une plaque de fermeture latérale (40),
- étape c2) de mise en place d'une première cloison perforée (20) sur une première plaque de fermeture longitudinale et à chacune de ses extrémités longitudinales, d'une rive (30), puis d'insertion d'un tube (10) dans chaque trou (41) de la rangée des plaques de fermeture latérale (40) la plus proche de la première cloison perforée (20), en formant ainsi une première nappe de tubes (10), ,
- étape c3) de répétition de l'étape c2) autant de fois qu'il est nécessaire pour obtenir n nappes de tubes (10) et au moins n cloisons perforées empilées les unes sur les autres de manière alternée, les étapes c2) et c3) étant réalisées de sorte que les premières perforations (21) sont agencées individuellement entre deux tubes consécutifs (10) d'une même nappe, que chaque rangée de deuxièmes perforations (22) chevauche un tube (10) avec un dégagement de part et d'autre de ce dernier pour le passage de fluide, et que les parties de cloison non perforées entre deux rangées de deuxième perforations chevauchent un tube (10) ; les canaux du deuxième fluide (C2) étant délimités individuellement entre deux cloisons perforées consécutives depuis une première perforation (21) à une extrémité latérale des cloisons perforées à une première perforation décalée à l'autre extrémité latérale des cloisons perforées en passant par les deuxièmes perforations (22) en chevauchement sur un tube (10) ;
- étape c4) de mise en place d'une deuxième plaque de fermeture longitudinale (50) sur le dessus de l'empilement réalisé selon l'étape c3)
d) assemblage soit par soudage-diffusion, soit par brasage, soit par brasage-diffusion entre les différents éléments de l'empilement fermé au moins par les plaques de fermeture (40, 50, 51) pour obtenir le module d'échangeur (1).

2. Procédé selon la revendication 1, l'étape a) comprenant la réalisation de deux plaques de fermeture longitudinale (50) sur les côtés longitudinaux, et l'étape d) d'assemblage étant réalisée entre les différents de l'empilement fermé par les plaques de fermeture (50, 51) longitudinales, les rives (30) et les deux plaques de fermeture latérales (40).

3. Procédé selon la revendication 1, l'étape a) comprenant la réalisation de quatre plaques de fermeture longitudinale (50, 51), l'étape c4) comprenant la mise en place des deux plaques de fermeture longitudinale (51) sur les côtés longitudinaux, et l'étape d) d'assemblage étant réalisée entre les différents de l'empilement fermé par les quatre plaques de fermeture (50, 51) longitudinales et les deux plaques de fermeture latérales (40).

4. Procédé selon l'une des revendications précédentes, l'étape d) d'assemblage étant réalisée par soudage-diffusion, l'étape c2) comprenant la soudure d'au moins une des extrémités des tubes (10) à l'une des plaques de fermeture latérales (40) dans laquelle ils sont insérés.

5. Procédé selon l'une des revendications 3 à 4, selon lequel on réalise après l'étape c4) une étape c6) de dégazage de l'intérieur de l'empilement par un orifice de dégazage débouchant vers l'extérieur, puis une étape c7) de fermeture de l'orifice de dégazage.

6. Procédé selon l'une quelconque des revendications 3 à 5, l'étape d) étant un cycle de compression isostatique à chaud CIC, dit cycle à basse pression, réalisé à une pression comprise entre 10 et 800 bar, de préférence compris entre 40et 400 bar, de préférence à une température comprise entre 450°C et 1200°C, de préférence pendant une durée comprise entre 15 min et 10 heures de préférence entre 30 min et 4h.

7. Procédé selon l'une quelconque des revendications 4 à 6, selon lequel après l'étape d), on réalise une étape e) de perçage d'orifices (60) sur les faces supérieure et/ou inférieure du module d'échangeur, les orifices (60) réalisés étant en communication fluidique respectivement avec les perforations (21) de l'une et/ou l'autre des cloisons perforées (20) de dessus et/ou du dessous.

8. Procédé selon la revendication 7, selon lequel après l'étape e), on réalise une étape f) d'application d'un cycle de compression isostatique à chaud (CIC), dit cycle CIC à haute pression au module déjà assemblé, de préférence
à une pression comprise entre 400 et 2000 bar, de préférence entre 800 et 1500 bar, de préférence à une température comprise entre 450°C et 1200°C, de préférence pendant une durée comprise entre 15 min et 10 heures, de préférence entre 30 min et 4h.

9. Procédé selon l'une quelconque des revendications 4 à 8, comprenant une étape de soudage de collecteurs de fluide sur le module assemblé selon l'étape d), un collecteur de fluide étant apte à distribuer ou récupérer un fluide circulant dans le premier ou le deuxième circuit.

10. Procédé selon l'une quelconque des revendications 4 à 9, selon lequel on soude à l'une des extrémités de chaque tube (10) un bouchon (11), l'empilement des nappes de tubes selon les étapes c2) et c3) étant réalisés de telle sorte qu'on insère une extrémité débouchante des tubes (10) d'une nappe dans une des plaques de fermeture latérale (40) et on insère l'extrémité des tubes (10) obstruée par les bouchons (11) de la nappe consécutive dans la même plaque de fermeture latérale.

11. Procédé selon l'une des revendications 4 à 10, toutes les extrémités des tubes (10), débouchantes ou le cas échéant obstruées par un bouchon (11) étant soudées aux plaques de fermeture latérale (40) avant l'étape d'assemblage d).

12. Procédé selon l'une des revendications 1 à 3, l'étape d) d'assemblage étant réalisée par brasage ou par brasage-diffusion, selon lequel entre les étapes b) et c), on réalise un dépôt de brasure soit sur toute la surface extérieure des tubes (10) et sur les faces longitudinales des rives (30), soit sur les surfaces des plaques (20) perforées et sur la surface extérieure des tubes (10) dans leur partie insérée dans les plaques de fermeture latérales (40), et un dépôt de brasure sur les faces internes des plaques de fermeture longitudinales (50).

13. Procédé selon la revendication 12, l'étape d) d'assemblage consistant en un traitement de brasage en une seule étape à une température comprise entre 100°C et 1200°C pour une durée comprise entre 15 min et 20h, de préférence entre 15 min et 3h.

14. Module d'échangeur de chaleur à au moins deux circuits de fluide comprenant un assemblage soudé ou brasé d'un empilement comprenant les éléments suivants:
- des tubes (10) d'axes longitudinal X, dont l'intérieur constituent les canaux du premier circuit de fluide (C1), dit premier circuit,
- au moins deux plaques pleines (50, 51) identiques deux à deux, dites plaques de fermeture longitudinales, et **caractérisé en ce que** l'empilement comprend aussi
- des plaques perforées (20) dites cloisons perforées; les cloisons perforées comprenant, à chacune de leurs extrémités latérales, des premières perforations (21) réparties sur leur largeur 12 et, des deuxième perforations (22) réparties en rangée sur leur longueur L2, la largeur 14 des deuxièmes perforations étant supérieures à la largeur (11 + 2*e1) des tubes (10), les premières perforations à une extrémité latérale d'une cloison perforée étant décalées latéralement par rapport aux premières perforations à l'autre extrémité latérale de ladite cloison perforée,
- des rives (30),
- des deux plaques (40) perforées de trous (41) sous la forme de grilles, dites plaques de fermeture latérale (40), la section transversale des trous (41) étant sensiblement égale à celle des tubes (10),
empilement dans lequel, à chaque extrémité latérale d'une des plaques de fermeture longitudinales (50) de plus grandes dimensions, est agencée une plaque de fermeture latérale (40),
dans lequel une première cloison perforée (20) est agencée sur une première plaque de fermeture longitudinale et à chacune des extrémités longitudinales d'une plaque de fermeture est agencée une rive (30),
dans lequel un tube (10) est inséré dans chaque trou (41) de la rangée des plaques de fermeture latérale (40) la plus proche de la première cloison perforée (20), en formant ainsi une première nappe de tubes (10), l'insertion étant réalisée de sorte que les premières perforations (21) sont agencées individuellement entre deux tubes consécutifs (10) d'une même nappe, que chaque rangée de deuxièmes perforations (22) chevauche un tube (10) avec un dégagement de part et d'autre de ce dernier pour le passage de fluide, et que les parties de cloison non perforées entre deux rangées de deuxième perforations chevauchent un tube (10) ; les canaux du deuxième fluide (C2) étant délimités individuellement entre deux cloisons perforées consécutives depuis une première perforation (21) à une extrémité latérale des cloisons perforées à une première perforation décalée à l'autre extrémité latérale des cloisons perforées en passant par les deuxièmes perforations (22) en chevauchement sur un tube (10) ;
et dans lequel les au moins les plaques de fermeture ferment l'empilement.

15. Système d'échangeur de chaleur comprenant une pluralité de modules selon la revendication 14 reliés entre eux.

## Patentansprüche

1. Verfahren zur Herstellung eines Wärmetauschermoduls mit wenigstens zwei Fluidkreisen, die jeweilige Kanäle aufweisen, welches Verfahren die folgenden Schritte aufweist:
a) Bereitstellen von Rohren (10) mit Längsachsen X, deren Inneres die Kanäle des ersten Fluidkreises (C1) bildet, der als erster Kreis bezeichnet wird, Bereitstellen von wenigstens zwei flachen, paarweise identischen Platten (50, 51), die als longitudinale Abschlussplatten bezeichnet werden, und **dadurch gekennzeichnet, dass** es die folgenden Schritte aufweist:
Bereitstellen von perforierten Platten (20), die als perforierte Trennwände bezeichnet werden, wobei die perforierten Trennwände an jedem ihrer seitlichen Enden erste Perforationen (21), die auf ihrer Breite 12 verteilt sind, und zweite Perforationen (22) aufweisen, die in Reihe auf ihrer Länge L2 verteilt sind, wobei die Breite 14 der zweiten Perforationen größer ist als die Breite (11 + 2 * e1) der Rohre (10), wobei die ersten Perforationen an einem seitlichen Ende einer perforierten Trennwand seitlich gegenüber den ersten Perforationen am anderen seitlichen Ende dieser perforierten Trennwand versetzt sind,
b) Bereitstellen von Begrenzungen (30) und von zwei mit Löchern (41) perforierten Platen (40) in der Form von Gittern, die als laterale Abschlussplatten (40) bezeichnet werden, wobei der Querschnitt der Löcher (41) im wesentlichen gleich dem der Rohre (10) ist,
c) einen Schritt c1) des Anbringens einer lateralen Abschlussplatte (40) an jedem seitlichen Ende einer der longitudinalen Abschlussplatten (50) mit den größeren Abmessungen,
- einen Schritt c2) des Anbringens einer ersten perforierten Trennwand (20) an einer ersten longitudinalen Abschlussplatte und, an jedem ihrer longitudinalen Enden, einer Begrenzung (30), dann des Einsetzens eines Rohres (10) in jedes Loch (41) der Reihe der lateralen Abschlussplatten (50), die der ersten perforierten Trennwand am nächsten sind, um so eine erste Lage von Rohren (10) zu bilden,
- einen Schritt c3) der Wiederholung des Schrittes c2) so oft, wie es notwendig ist, um n Lagen von Rohren (10) und wenigstens n perforierte Trennwände zu erhalten, die abwechselnd aufeinander gestapelt sind, wobei die Schritte c2) und c3) so ausgeführt werden, dass die ersten Perforationen (21) einzeln zwischen zwei aufeinanderfolgenden Rohren (10) derselben Lage angeordnet sind, jede Reihe der zweiten Perforationen (22) auf einem Rohr (10) aufsitzt, mit einem Freiraum beiderseits des letzteren für den Durchgang des Fluids, und die nicht perforierten Teile der Trennwand zwischen zwei Reihen der zweiten Perforationen mit einem Rohr (10) überlappen, wobei die Kanäle des zweiten Fluids (C2) einzeln zwischen zwei aufeinanderfolgenden perforierten Trennwänden begrenzt werden, von einer ersten Perforation (21) an einem seitlichen Ende der perforierten Trennwände zu einer versetzten ersten Perforation am anderen seitlichen Ende der perforierten Trennwände, wobei sie durch die auf einem Rohr (10) sitzenden zweiten Perforationen (22) hindurchgehen;
- einen Schritt c4) des Anbringens einer zweiten longitudinalen Abschlussplatte (50) auf dem in Schritt c3) gebildeten Stapel,
d) Fügen, sei es durch Diffusionsschweißen, durch Löten, oder Diffusionslöten, der verschiedenen Elemente des Stapels, der zumindest durch die Abschlussplatten (40, 50, 51) abgeschlossen ist, um das Wärmetauschermodul (1) zu erhalten.

2. Verfahren nach Anspruch 1, bei dem der Schritt a) das Bereitstellen von zwei longitudinalen Abschlussplatten (50) an den longitudinalen Seiten enthält und der Schritt d) des Fügens zwischen den verschiedenen des Stapels ausgeführt wird, der durch die longitudinalen Abschlussplatten (50, 51), die Begrenzungen (30) und die beiden lateralen Abschlussplatten (40) abgeschlossen ist.

3. Verfahren nach Anspruch 1, bei dem der Schritt a) das Bereitstellen von vier longitudinalen Abschlussplatten (50, 51) umfasst, der Schritt c4) das Anbringen der beiden longitudinalen Abschlussplatten (51) an den longitudinalen Seiten umfasst und der Schritt d) des Fügens zwischen den verschiedenen des Stapels ausgeführt wird, der durch die vier longitudinalen Abschlussplatten (50, 51) und die beiden lateralen Abschlussplatten (40) abgeschlossen wird.

4. Verfahren nach einem der vorstehenden Ansprüche, bei dem der Schritt d) des Fügens durch Diffusionsschweißen ausgeführt wird, der Schritt c2) das Anschweißen wenigstens eines der Enden der Rohre (10) an eine der lateralen Abschlussplatten (40) umfasst, in die sie eingesteckt sind.

5. Verfahren nach einem der Ansprüche 3 bis 4, bei dem nach dem Schritt c4) ein Schritt c6) der Entgasung des Inneren des Stapels durch eine nach außen führende Entgasungsöffnung und dann ein Schritt c7) des Verschließens der Entgasungsöffnung ausgeführt wird.

6. Verfahren nach einem der Ansprüche 3 bis 5, bei dem der Schritt d) ein isostatischer Heißkompressionszyklus CIC ist, der als Niederdruckzyklus bezeichnet wird und ausgeführt wird bei einem Druck zwischen 10 und 800 bar, vorzugsweise zwischen 40 und 400 bar, vorzugsweise bei einer Temperatur zwischen 450° C und 1200° C, vorzugsweise für eine Dauer zwischen 15 min und 10 Stunden, vorzugsweise zwischen 30 min und 4 h.

7. Verfahren nach einem der Ansprüche 4 bis 6, bei dem nach dem Schritt d) ein Schritt e) des Durchbrechens der oberen und/oder unteren Flächen des Wärmetauschermoduls mit Öffnungen (60) ausgeführt wird, wobei die Öffnungen (60) so gebildet werden, dass sie jeweils in Fluidverbindung mit den Perforationen (21) der einen und/oder der anderen der oberhalb und/oder unterhalb liegenden perforierten Trennwände (20) stehen.

8. Verfahren nach Anspruch 7, bei dem nach dem Schritt e) ein Schritt f) der Ausführung eines isostatischen Heißkompressionszyklus (CIC) ausgeführt wird, der als Hochdruck CIC-Zyklus bezeichnet wird, an dem bereits zusammengefügten Modul, vorzugsweise bei einem Druck zwischen 400 und 2000 bar, vorzugsweise zwischen 800 und 1500 bar, vorzugsweise bei einer Temperatur zwischen 450° C und 1200° C, vorzugsweise für eine Dauer zwischen 15 min und 10 Stunden, vorzugsweise zwischen 30 min und 4 h.

9. Verfahren nach einem der Ansprüche 4 bis 8, mit einem Schritt des Anschweißens eines Fluidkollektors an das in Schritt d) zusammengefügte Modul, wobei ein Fluidkollektor in der Lage ist, ein in dem ersten Kreis oder in dem zweiten Kreis zirkulierendes Fluid zu verteilen oder zu sammeln.

10. Verfahren nach einem der Ansprüche 4 bis 9, bei dem an ein Ende jedes Rohres (10) ein Stopfen (11) angeschweißt wird und das Stapeln der Lagen der Rohre in den Schritten c2) und c3) so ausgeführt wird, dass man ein offenes Ende der Rohre (10) einer Lage in eine der lateralen Abschlussplatten (40) einsteckt und das durch die Stopfen (11) verschlossene Ende der Rohre (10) der nachfolgenden Lage in dieselbe laterale Abschlussplatte einsteckt.

11. Verfahren nach einem der Ansprüche 4 bis 10, bei dem vor dem Fügeschritt d) alle Enden der Rohre (10), offen oder gegebenenfalls durch einen Stopfen (11) verschlossen, an laterale Abschlussplatten (40) angeschweißt werden.

12. Verfahren nach einem der Ansprüche 1 bis 3, bei dem der Schritt d) des Fügens durch Löten oder Diffusionslöten ausgeführt wird, bei dem zwischen den Schritten b) und c) ein Depot an Lot gebildet wird, sei es auf der gesamten äußeren Oberfläche der Rohre (10) und auf den Längsseiten der Begrenzungen (30), oder auf den Oberflächen der perforierten Platten (20) und auf der äußeren Oberfläche der Rohre (10) in ihrem in die lateralen Abschlussplatten (40) eingesteckten Teil, und ein Depot an Lot auf den Innenflächen der longitudinalen Abschlussplatten (50) angebracht wird.

13. Verfahren nach Anspruch 12, bei dem der Schritt d) des Fügens in einer Lötbehandlung in einem einzigen Schritt besteht, bei einer Temperatur zwischen 100° C und 1200° C für einer Dauer zwischen 15 min und 20 h, vorzugsweise zwischen 15 min und 3 h.

14. Wärmetauschermodul mit wenigstens zwei Fluidkreisen, das aufweist:
eine geschweißte oder gelötete Anordnung eines Stapels, der die folgenden Elemente aufweist:
- Rohre (10) mit longitudinalen Achsen X, deren Inneres die Kanäle des ersten Fluidkreises (C1) bildet, der als erster Kreis bezeichnet wird,
- wenigstens zwei flache, paarweise identische Platten (50, 51), die als longitudinale Abschlussplatten bezeichnet werden,
**dadurch gekennzeichnet, dass** der Stapel außerdem aufweist:
- perforierte Platten (20), die als perforierte Trennwände bezeichnet werden, wobei die perforierten Trennwände an jedem ihrer seitlichen Enden erste Perforationen (21), die auf ihrer Breite 12 verteilt sind, und zweite Perforationen (22) aufweisen, die in Reihe auf Ihrer Länge L2 verteilt sind, wobei die Breite 14 der zweiten Perforationen größer ist als die Breite (11 + 2 * e1) der Rohre (10), die ersten Perforationen an einem seitlichen Ende einer perforierten Trennwand seitlich gegenüber den ersten Perforationen am anderen seitlichen Ende dieser perforierten Trennwand versetzt sind,
- Begrenzungen (30),
- zwei mit Löchern (41) perforierte Platten (40) in der Form von Gittern, die als laterale Abschlussplatten (40) bezeichnet werden, wobei der Querschnitt der Löcher (41) im wesentlichen gleich dem der Rohre (10) ist,
in welchem Stapel an jedem seitlichen Ende der einen der longitudinalen Abschlussplatten (50) mit größeren Abmessungen eine laterale Abschlussplatte (40) angeordnet ist,
wobei eine erste perforierte Trennwand (20) an einer ersten longitudinalen Abschlussplatte angeordnet ist und an jedem longitudinalen Ende einer Abschlussplatte eine Begrenzung (30) angeordnet ist,
wobei ein Rohr (10) in jedes Loch (41) der Reihe der lateralen Abschlussplatten (40) eingesteckt ist, die der ersten perforierten Trennwand (20) am nächsten sind, um so eine erste Lage von Rohren (10) zu bilden, wobei das Einstecken so ausgeführt ist, dass die ersten Perforationen (21) einzeln zwischen zwei aufeinanderfolgenden Rohren (10) derselben Lage angeordnet sind, jede Reihe der zweiten Perforationen (22) auf einem Rohr (10) aufsitzt, mit einem Freiraum beiderseits des letzteren für den Durchgang des Fluids, und dass die nicht perforierten Teile der Trennwand zwischen zwei Reihen der zweiten Perforationen mit einem Rohr (10) überlappen, wobei die zweiten Fluidkanäle (C2) einzeln zwischen zwei aufeinanderfolgenden perforierten Trennwänden gebildet werden, von einer ersten Perforation (21) an einem seitlichen Ende der perforierten Trennwände zu einer versetzten ersten Perforation am anderen seitlichen Ende der perforierten Trennwände, und durch die zweiten Perforationen (22) auf einem Rohr (10) hindurchgehen;
und wobei wenigstens die Abschlussplatten den Stapel abschließen.

15. Wärmetauschersystem mit mehreren miteinander verbundenen Modulen nach Anspruch 14.

## Claims

1. Method for producing a heat exchanger module with at least two fluid circuits, each comprising channels, comprising the following steps:
a) producing tubes (10) with longitudinal axes X, the inside of which is made up of the channels of the first fluid circuit (Cl), called the first circuit, producing at least two identical solid plates (50, 51) two by two, called longitudinal closure plates, and **characterised in that** it comprises the following steps:
producing perforated plates (20) called perforated partitions; at each of their lateral ends the perforated partitions comprising first perforations (21) distributed over their width 12 and second perforations (22) distributed in rows over their length L2, the width 14 of the second perforations being greater than the width (11+ 2*e1) of the tubes (10), the first perforations at one lateral end of a perforated partition being offset laterally in relation to the first perforations at the other lateral end of this perforated partition,
b) producing edges (30) and two plates (40) perforated with holes (41) in the form of grids, called lateral closure plates (40), the transverse section of the holes (41) being more or less equal to that of the tubes (10),
c)
- step c1) involving putting in place a lateral closure plate (40) at each lateral end of one of the longitudinal closure plates (50) with larger dimensions,
- step c2) involving putting in place a first perforated partition (20) on a first longitudinal closure plate and an edge (30) at each of its longitudinal ends, then inserting a tube (10) into each hole (41) in the row of lateral closure plates (40) closest to the first perforated partition (20), thus forming a first layer of tubes (10),
- step c3) involving repeating step c2) as many times as necessary to obtain n layers of tubes (10) and at least n perforated partitions stacked one on top of the other alternately, steps c2) and c3) being carried out so that the first perforations (21) are arranged individually between two consecutive tubes (10) of one and the same layer, each row of second perforations (22) overlaps a tube (10) with an opening on each side of it for fluid to pass and the parts of the partition not perforated between two rows of second perforations overlap a tube (10); the channels of the second fluid (C2) being delimited individually between two consecutive perforated partitions from a first perforation (21) at one lateral end of the perforated partitions to a first perforation offset at the other lateral end of the perforated partitions passing through the second perforations (22) overlapping on a tube (10);
- step c4) involving putting in place a second longitudinal closure plate (50) on the top of the stack produced according to step c3)
d) assembling either by diffusion welding or by brazing or by diffusion brazing between the different elements of the stack closed at least by the closure plates (40, 50, 51) to obtain the exchanger module (1).

2. Method according to claim 1, step a) comprising producing two longitudinal closure plates (50) on the longitudinal sides and step d) involving assembling being carried out between the different *elements* of the stack closed by the longitudinal closure plates (50, 51), the edges (30) and the two lateral closure plates (40).

3. Method according to claim 1, step a) comprising producing four longitudinal closure plates (50, 51), step c4) comprising putting in place two longitudinal closure plates (51) on the longitudinal sides and step d) involving assembling being carried out between the different *elements* of the stack closed by the four longitudinal closure plates (50, 51) and the two lateral closure plates (40).

4. Method according to one of the previous claims, stepe d) involving assembling being carried out by diffusion welding, step c2) comprising welding at least one of the ends of the tubes (10) to one of the lateral closure plates (40) into which they are inserted.

5. Method according to one of claims 3 to 4, according to which after step c4) a step c6) is carried out involving degassing the inside of the stack through a degassing hole opening towards the outside, then a step c7) involving closing the degassing hole.

6. Method according to any one of claims 3 to 5, step d) being a HIP hot isostatic pressing cycle, called a low pressure cycle, carried out at a pressure of between 10 and 800 bar, preferably between 40 and 400 bar, preferably at a temperature of between 450°C and 1200°C, preferably for a duration of between 15 minutes and 10 hours, preferably between 30 minutes and 4 hours.

7. Method according to any one of claims 4 to 6, according to which after step d) a step e) is carried out involving drilling holes (60) on the upper and/or lower faces of the exchanger module, the holes (60) produced being in fluid communication with the perforations (21) of one and/or the other of the top and/or bottom perforated partitions (20) respectively.

8. Method according to claim 7, according to which after step e) a step f) is carried out involving applying a hot isostatic pressing cycle (HP), called a high pressure HIP cycle, to the module already assembled, preferably at a pressure of between 400 and 2000 bar, preferably between 800 and 1500 bar, preferably at a temperature of between 450°C and 1200°C, preferably for a duration of between 15 minutes and 10 hours, preferably between 30 minutes and 4 hours.

9. Method according to any one of claims 4 to 8, comprising a step involving welding fluid manifolds on the module assembled according to step d), a fluid manifold being able to distribute or recover a fluid circulating in the first or the second circuit.

10. Method according to any one of claims 4 to 9, according to which a plug (11) is welded to one of the ends of each tube (10), the stack of layers of tubes according to steps c2) and c3) being produced so that an opening end of the tubes (10) of a layer is inserted into one of the lateral closure plates (40) and the end of the tubes (10) blocked by the plugs (11) of the consecutive layer is inserted into the same lateral closure plate.

11. Method according to one of claims 4 to 10, all the ends of the tubes (10), opening or blocked by a plug (11) where appropriate, being welded to the lateral closure plates (40) before step d) involving asembling.

12. Method according to one of claims 1 to 3, step d) involving assembling being carried out by brazing or diffusion brazing, according to which between steps b) and c) brazing material is deposited either on the whole outside surface of the tubes (10) and on the longitudinal faces of the edges (30) or on the surfaces of the perforated plates (20) and on the outside surface of the tubes (10) in the part of them inserted into the lateral closure plates (40) and brazing material is deposited on the internal faces of the longitudinal closure plates (50).

13. Method according to claim 12, step d) involving assembling consisting of processing by brazing in a single step at a temperature of between 100°C and 1200°C for a duration of between 15 minutes and 20 hours, preferably between 15 minutes and 3 hours.

14. Heat exchanger module with at least two fluid circuits comprising welded or brazed assembling of a stack comprising the following elements:
- tubes (10) with longitudinal axes X, the inside of which is made up of the channels of the first fluid circuit (Cl), called the first circuit,
- at least two identical solid plates (50, 51) two by two, called longitudinal closure plates,
and **characterised in that** the stack also comprises
- perforated plates (20) called perforated partitions; at each of their lateral ends the perforated partitions comprising first perforations (21) distributed over their width 12 and second perforations (22) distributed in rows over their length L2, the width 14 of the second perforations being greater than the width (11+ 2*e1) of the tubes (10), the first perforations at one lateral end of a perforated partition being offset laterally in relation to the first perforations at the other lateral end of this perforated partition,
- edges (30),
- two plates (40) perforated with holes (41) in the form of grids, called lateral closure plates (40), the transverse section of the holes (41) being more or less equal to that of the tubes (10),
stack in which a lateral closure plate (40) is arranged at each lateral end of one of the longitudinal closure plates (50) with larger dimensions,
in which a first perforated partition (20) is arranged on a first longitudinal closure plate and an edge (30) is arranged at each of the longitudinal ends of a closure plate,
in which a tube (10) is inserted into each hole (41) in the row of lateral closure plates (40) closest to the first perforated partition (20), thus forming a first layer of tubes (10), insertion being carried out so that the first perforations (21) are arranged individually between two consecutive tubes (10) of one and the same layer, each row of second perforations (22) overlaps a tube (10) with an opening on each side of it for fluid to pass and the parts of the partition not perforated between two rows of second perforations overlap a tube (10); the channels of the second fluid (C2) being delimited individually between two consecutive perforated partitions from a first perforation (21) at a lateral end of the perforated partitions to a first perforation offset at the other lateral end of the perforated partitions passing through the second perforations (22) overlapping on a tube (10);
and in which at least the closure plates close the stack.

15. Heat exchanger system comprising a plurality of modules according to claim 14 connected to each other.
